(19) Europäisches Patentamt

European Patent Office

Office européen des brevets

(11) Veröffentlichungsnummer: **0 239 014**
**A2**

(12) **EUROPÄISCHE PATENTANMELDUNG**

(21) Anmeldenummer: **87104064.8**

(22) Anmeldetag: **19.03.87**

(51) Int. Cl.⁴: **G09G 1/04 , G09G 1/00**

(30) Priorität: **26.03.86 DE 3610190**

(43) Veröffentlichungstag der Anmeldung:
**30.09.87 Patentblatt 87/40**

(84) Benannte Vertragsstaaten:
**DE FR IT SE**

(71) Anmelder: **Blaupunkt-Werke GmbH**
**Robert-Bosch-Strasse 200**
**D-3200 Hildesheim(DE)**

(72) Erfinder: **Schiller, Wilfried**
**Elly-Heuss-Knapp-Weg 21**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Verfahren und Schaltungsanordnungen zur Regelung des Arbeitspunktes von Videoendstufen.**

(57) Bei einem Verfahren zur Regelung des Arbeitspunktes von Videoendstufen von Monitoren, bei denen der für die Darstellung von Information vorgesehene Teil des Rasters vollständig auf dem sichtbaren Teil des Bildschirms geschrieben wird, wird der Strahlstrom während ausgewählter, für die Darstellung der Information auf dem Bildschirm nicht benötigter Zeilen gemessen und zur Regelung des Arbeitspunktes benutzt. Durch Beeinflussung des Vertikal-Ablenkstroms werden die ausgewählten Zeilen auf einem nicht sichtbaren Teil des Bildschirms geschrieben.

EP 0 239 014 A2

## Verfahren und Schaltungsanordnungen zur Regelung des Arbeitspunktes von Videoendstufen

Die Erfindung geht aus von einer Schaltungsanordnung nach der Gattung des Hauptanspruchs.

Für Farbfernsehgeräte sind Schaltungsanordnungen zur Regelung des Arbeitspunktes der Videoendstufe bekannt, bei welchen eine dem Strahlstrom entsprechende Spannung während einer Zeile innerhalb des vertikalfrequenten Austastintervalls nach dem Vertikalrücklauf mit einer Vergleichsspannung verglichen wird und das Ergebnis des Vergleichs während des darauffolgenden Halbbildes gespeichert wird. In Abhängigkeit von der gespeicherten Spannung erfolgt eine Einstellung des Arbeitspunktes der Videoendstufe.

Bei Fernsehgeräten wird überlicherweise das Raster größer als der Bildschirm bzw. die von einem Rahmen freigegebene Fläche des Bildschirms geschrieben. Es ist daher möglich, zu Beginn des Vertikalhinlaufs den Strahlstrom auf eine zur Ableitung eines Meßwertes geeignete Größe aufzutasten, ohne daß dieses auf dem Bildschirm sichtbar wird.

Bei Datensichtgeräten wird jedoch das gesamte Raster auf dem Bildschirm dargestellt, so daß eine Auftastung des Strahlstroms, um Meßzeilen zu gewinnen, an den Rändern des Rasters nicht durchgeführt werden kann, ohne daß diese Zeilen sichtbar werden.

Es wurden daher als Datensichtgeräte vorgesehene Farbmonitore bisher nicht mit der von Fernsehempfängern bekannten Regelung des Arbeitspunktes der Videoendstufen ausgerüstet.

Das erfindungsgemäße Verfahren mit den kennzeichnenden Merkmalen des Hauptanspruchs hat den Vorteil, daß eine Arbeitspunktregelung möglich ist, ohne daß die Meßzeilen störend in Erscheinung treten.

Eine Weiterbildung der Erfindung sieht vor, daß die ausgewählten Zeilen auf einem von einem Rahmen abgedeckten Teil des Bildschirmes geschrieben werden. Diese Weiterbildung kann in vorteilhafter Weise bei den üblichen Farbmonitoren angewendet werden, welche mit einem Rahmen vor dem Bildschirm versehen sind.

Eine andere Weiterbildung, daß nämlich die ausgewählten Zeilen außerhalb des aktiven Bildschirms geschrieben werden, ermöglicht eine Anwendung des erfindungsgemäßen Verfahrens bei Geräten ohne Rahmen.

Durch die in den Unteransprüchen aufgeführten Maßnahmen sind vorteilhafte Weiterbildungen und Verbesserungen der im Hauptanspruch angegebenen Erfindung möglich.

Insbesondere sind in den Unteransprüchen vorteilhafte Schaltungen zur Durchführung des erfindungsgemäßen Verfahrens angegeben.

Ausführungsbeispiele der Erfindung sind in der Zeichnung an Hand mehrerer Figuren dargestellt und in der nachfolgenden Beschreibung näher erläutert. Es zeigt:

Fig. 1 eine Schaltungsanordnung zur Regelung des Arbeitspunktes von Videoendstufen,

Fig. 2 Diagramme von bei der Schaltung nach Fig. 1 und bei dem erfindungsgemäßen Verfahren auftretenden Spannungen und Strömen,

Fig. 3 ein erstes Ausführungsbeispiel für eine Schaltungsanordnung zur Durchführung des erfindungsgemäßen Verfahrens und

Fig. 4 ein zweites Ausführungsbeispiel.

Gleiche Teile sind in den Figuren mit gleichen Bezugszeichen versehen.

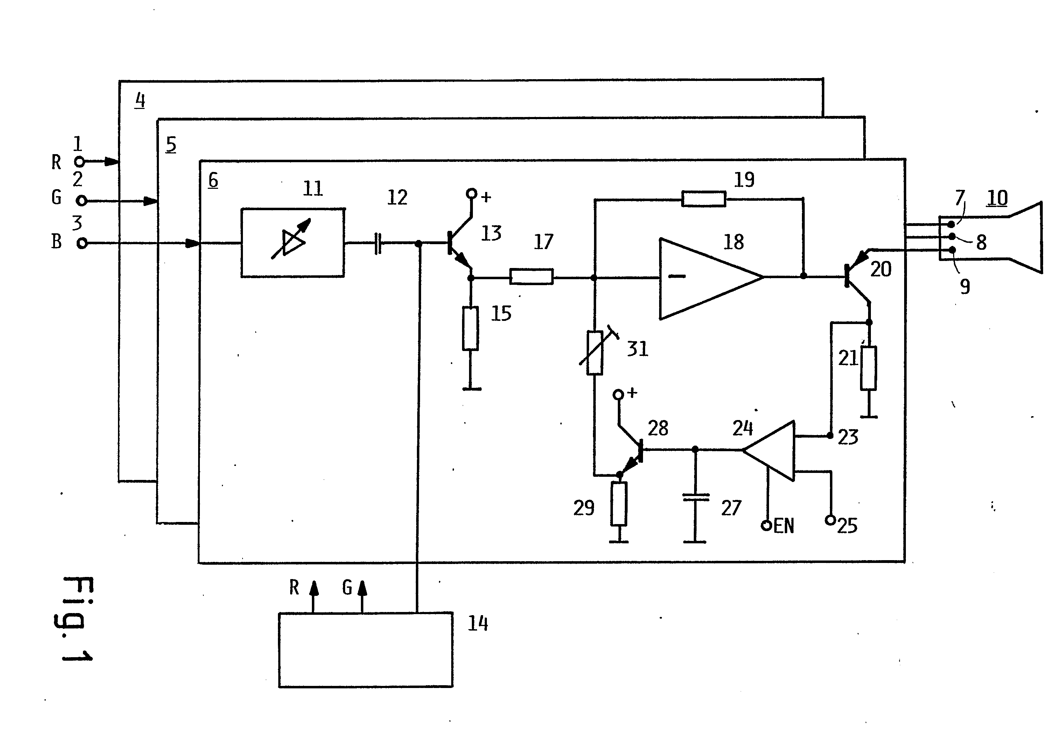

Fig 1 dient zur Erläuterung des Prinzips der an sich bekannten Strahlstrom-bzw. Arbeitspunktregelung, auch Sperrpunktregelung genannt. Über die Eingänge 1, 2, 3 der Schaltungsanordnung nach Fig. 1 werden die Farbwertsignale R, G, B den Videoverstärkern 4, 5, 6 zugeführt, deren Ausgänge mit je einer Kathode 7, 8, 9 einer Farbbildröhre 10 verbunden sind.

Da die Verstärker 4, 5, 6 gleichartig aufgebaut sind, ist lediglich der Verstärker 6 genauer dargestellt. Vom Eingang 3 gelangt das Farbwertsignal zu einem Videovorverstärker, welcher unter anderem mit Hilfe einer einstellbaren Verstärkung eine Kontrasteinstellung ermöglicht. Der Ausgang des Videovorverstärkers 11 ist über einen Kondensator 12 mit der Basis eines als Emitterfolger geschalteten Transistors 13 verbunden. In einer Klemmschaltung 14 wird periodisch während des zeilenfrequenten Rücklaufs die Basis des Transistors 13 mit konstantem Potential verbunden, wodurch die Videosignale in an sich bekannter Weise einen konstanten Gleichspannungswert erhalten. Die Klemmschaltung 14 ist in gleicher Weise mit den Videoverstärkern 4 und 5 verbunden.

Der Emitter des Transistors 13 ist über den Arbeitswiderstand 15 mit Massepotential verbunden, während der Kollektor des Transistors 13 an einen positiven Pol 16 einer Betriebsspannungsquelle angeschlossen ist. Über einen Koppelwiderstand 17 wird das Farbwertsignal zum Eingang eines invertierenden Verstärkers 18 geführt, dessen Leerlaufverstärkung derart hoch ist, daß die effektive Verstärkung etwa dem Verhältnis zwischen dem Gegenkopplungswiderstand 19 und dem Koppelwiderstand 17 entspricht. Am Ausgang des Verstärkers 18 haben die Videosignale bereits eine zur Ansteuerung der Bildröhre ausreichende Amplitude. Sie werden über einen als Emitterfolger geschalteten Ausgangstransistor 20 zur Kathode 9 der Farbbildröhre 10 geleitet.

An einem zwischen den Kollektor des Ausgangstransistors 20 und Massepotential geschalteten Widerstand 21 ist eine Spannung abnehmbar, welche proportional zum Strahlstrom ist. Diese wird in an sich bekannter Weise in einer Regelschaltung zur Regelung des Arbeitspunktes des Videoverstärkers 18, 20 ausgewertet.

Dazu wird die vom Widerstand 21 abgenommene Spannung einem Eingang 23 eines Differenzverstärkers 24 zugeführt, an dessen anderem Eingang 25 eine Bezugsspannung liegt.

Der Differenzverstärker 24 ist ein schaltbarer Operationsverstärker, dessen Ausgang 26 nur ein Signal abgibt, wenn an einem Schalteingang EN ein entsprechendes Signal ansteht. Während der übrigen Zeit ist der Ausgang 26 hochohmig geschaltet. Dem Schalteingang EN wird nun ein Impuls zugeführt, der einer aktiven Zeile innerhalb des vertikalfrequenten Austastintervalls nach dem Strahlrücklauf entspricht. Während dieser Zeit wird also das Ergebnis der Differenzbildung zwischen der dem Strahlstrom entsprechenden Spannung und einer Bezugsspannung vom Differenzverstärker 24 abgegeben und ein Kondensator 27 auf diesen Wert aufgeladen. Der schaltbare Differenzverstärker 24 und der Kondensator 27 bilden somit eine Abtast-und Halteschaltung (Sample and Hold).

Die am Kondensator 27 anstehende Spannung wird der Basis eines Transistors 28 zugeführt, welcher zusammen mit dem Widerstand 29 als Impedanzwandler geschaltet ist. Dabei bildet die Basis des Transistors 28 einen hochohmigen Eingang, so daß die Ladung des Kondensators 27 während einer Halbbildperiode prak tisch konstant bleibt.

Die Regelschaltung ist dreifach vorhanden, jeweils für eines der Farbwertsignale R, G, B. Im Videoverstärker 6 gelangt die Steuerspannung über einen einstellbaren Widerstand 31 an den Eingang des invertierenden Verstärkers 18. Mit Hilfe der Veränderung des Widerstandes 31 kann die Verstärkung des durch den Videoprozessor und den Videoverstärker gebildeten Regelkreises eingestellt werden, ohne daß die Verstärkung für das vom Transistor 13 zugeführte Videosignal verändert wird.

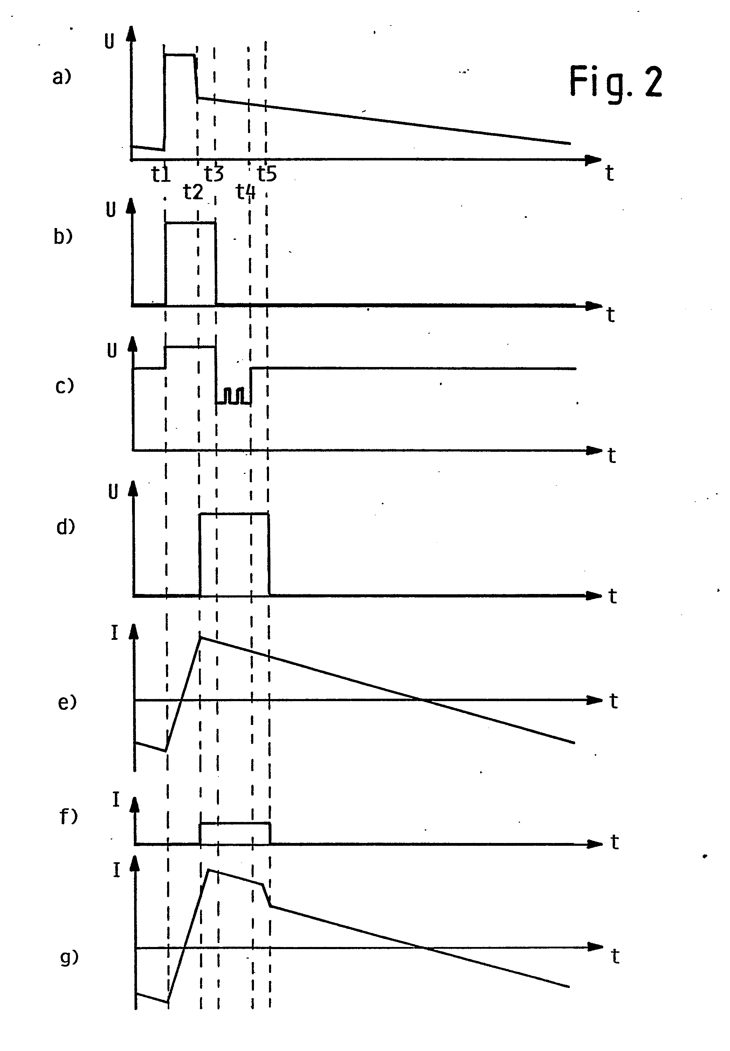

Die in Fig. 2 dargestellten Diagramme zeigen Spannungs-und Stromverläufe während einer Vertikal-Ablenkperiode. Dabei stellt das Diagramm a) die Ausgangsspannung einer Vertikal-Ablenkschaltung dar. Zwischen t1 und t2 erfolgt der Vertikal-Rücklauf. Durch die induktive Komponente der Ablenkspule und die schnellere Stromänderung während des Rücklaufs entsteht in an sich bekannter Weise zwischen t1 und t2 ein Spannungsimpuls. Während des Vertikal-Hinlaufs verläuft die Ausgangsspannung der Vertikal-Ablenkschaltung im wesentlichen zeitlinear.

Damit der gesamte Rucklaufbereich einschließlich eines möglicherweise gestörten Beginns des Hinlaufs des Kathodenstrahls ausgetastet wird, wird der Farbbildröhre 10 (Fig. 1) ein vertikalfrequenter Austastimpuls, wie in Diagramm b) dargestellt, zugeführt, welcher bis zum Zeitpunkt t3 dauert.

Bei der im Zusammenhang mit Fig. 1 erläterten Regelung wird im Anschluß an die Strahlaustastung mit Hilfe des in Diagramm c) gezeigten Impulses der Kathodenstrahl fur eine oder mehrere Zeilen freigegeben. Wird er für mehrere Zeilen freigegeben, so wird der Kathodenstrahl zwischen diesen Zeilen horizontalfrequent ausgetastet.

Wie eingangs bereits erläutert, wird bei Fernsehgeräten üblicherweise das Raster so groß geschrieben, daß es über den Rahmen, welcher den Rand der Bildröhre abdeckt, hinausgeht. Der obere Rand des Rasters ist bei Fernsehgeräten also nicht sichtbar, so daß auch die fur die Strahlstrom-Regelung hellgetasteten Zeilen nicht störend in Erscheinung treten. Bei Monitoren, welche für Daten und graphische Darstellungen vorgesehen sind, wird jedoch das Raster kleiner geschrieben, so daß es ganz sichtbar ist. Um eine störende Helltastung der Meßzeilen fur die Strahlstrom-Regelung zu vermeiden, wird gemäß der vorliegenden Erfindung der Elektronenstrahl während dieser Zeilen zusätzlich abgelenkt. Dazu wird in einer an sich bekannten und daher nicht näher dargestellten Impulsformschaltung ein Impuls gemäß Diagramm d) erzeugt.

Wegen der im wesentlichen durch die induktive Komponente der Vertikal-Ablenkspule bedingten Trägheit beginnt der Impuls bereits bei t2, also vor dem Beginn der Meßzeilen bei t3. Ferner liegt aus Sicherheitsgründen die Ruckflanke des Impulses bei t5 etwas später als das Ende der Meßzeilen bei t4.

Diagramm e) stellt den Verlauf des Vertikal-Ablenkstroms bei der üblichen Rasterdarstellung dar. Aus dem in Diagramm d) gezeigten Spannungsimpuls wird der in Diagramm f) gezeigte Stromimpuls gewonnen, welcher dem üblichen Vertikal-Ablenkstrom überlagert wird, so daß der in Diagramm g) dargestellte Vertikal-Ablenkstrom entsteht. Zu Beginn des vertikalfrequenten Hinlaufs, also am oberen Rand des Rasters, springt der Strahl um einen vorgegebenen Wert nach oben, so daß die Zeilen, welche zur Strahlstrom-Regelung hellgetastet werden, an einer Stelle des Bildschirms geschrieben werden, welche durch einen Rahmen abgedeckt ist. Bei der Verwendung von Bildröhren ohne Rahmen kann der Strahl in einen Bereich abgelenkt werden, welcher nicht zum aktiven Bildschirm gehört, welcher also nicht mit Leuchtstoffen versehen ist.

Zum Zeitpunkt t5 springt der Strahl wieder in die vertikale Lage, welche durch die übliche sägezahnförmige Vertikal-Ablenkung gegeben ist. Der für die Darstellung der Videosignale vorgesehene Teil des Rasters bleibt also unverändert.

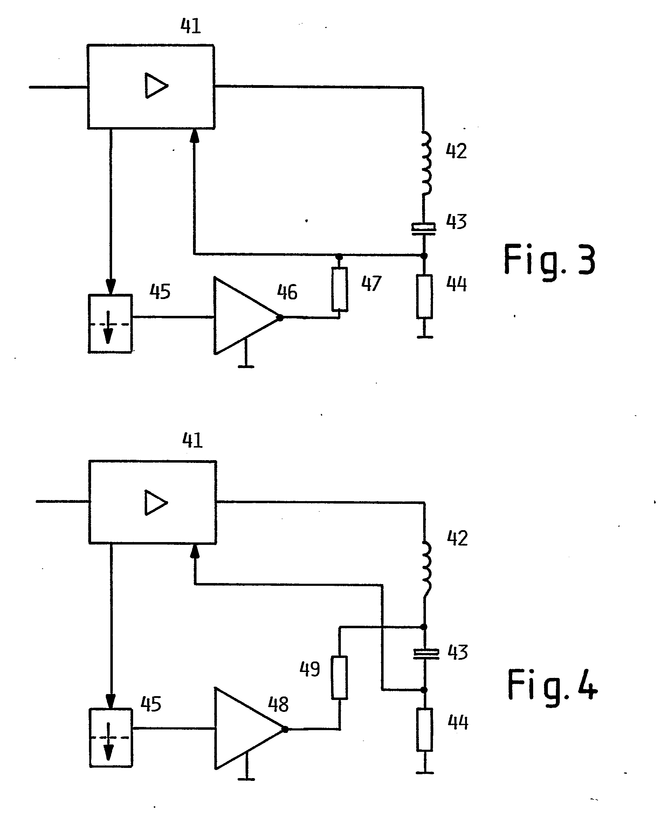

Bei der in Fig. 3 dargestellten Schaltungsanordnung ist an den Ausgang einer Vertikal-Ablenkschaltung 41 eine Reihenschaltung aus einer Vertikal-Ablenkspule 42, einem Kondensator 43 und einem Gegenkopplungs-Widerstand 44 angeschlossen. Vom Gegenkopplungs-Widerstand 44 ist eine Spannung abnehmbar, welche einem Steuereingang der Vertikal-Ablenkschaltung 41 zuführbar ist. Da die Spannung am Gegenkopplungs-Widerstand 44 dem durch die Verikal-Ablenkspule 42 fließenden Strom entspricht, kann in an sich bekannter Weise der Vertikal-Ablenkstrom derart geregelt werden, daß sich eine möglichst lineare Vertikal-Ablenkung auf dem Bildschirm ergibt.

Zur Durchfuhrung des erfindungsgemäßen Verfahrens wird der Vertikal-Ablenkschaltung 41 ein vertikalfrequenter Impuls entnommen und einem Impulsformer 45 zugeführt, an dessen Ausgang der in Fig. 2d) dargestellte Ansteuerimpuls ansteht. Dieser Impuls wird einem Verstärker 46 zugeführt, dessen Ausgang über einen Widerstand 47 mit dem Gegenkopplungspfad des Vertikal-Ablenkkreises verbunden ist. Während des Auftretens des Ansteuerimpulses wird durch den Verstärker 46 der Widerstand 47 dem Gegenkopplungs-Widerstand 44 parallelgeschaltet. Der sich ergebende Widerstandswert ist somit kleiner, wodurch die der Vertikal-Ablenkschaltung zugeführte Spannung bei gleichem Ablenkstrom ebenfalls kleiner wird. Der Vertikal-Ablenkschaltung wird sozusagen ein kleinerer Ablenkstrom vorgetäuscht, wodurch der Ablenkstrom während des Ansteuerimpulses entsprechend erhöht wird.

Fig. 4 zeigt eine andere Schaltung zur Durchführung des erfindungsgemäßen Verfahrens, bei welcher die Vertikal-Ablenkschaltung 41, die Vertikal-Ablenkspule 42, der Kondensator 43 und der Gegenkopplungs-Widerstand 44 in gleicher Weise wie bei der Schaltungsanordnung nach Fig. 3 angeordnet sind. Auch ein Impulsformer 45 dient zur Formung des Ansteuerimpulses für einen Verstärker 48, welcher jedoch nicht wie bei der Schaltungsanordnung nach Fig. 3 in den Gegenkopplungs-Kreis eingreift, sondern über einen Widerstand 49 der Ablenkspule 42 direkt zusätzlichen Strom zuführt.

Im Rahmen des Fachmännischen sind Abwandlungen und Verbesserungen des erfindungsgemäßen Verfahrens und der Schaltungsanordnungen möglich. So können beispielsweise anstelle der Verstärker 46, 48 Halbleiterschalter vorgesehen werden. Auch die Überlagerung eines Stromimpulses mit dem sägezahnförmigen Ablenkstrom kann in anderer Weise, als in Fig. 4 dargestellt, erfolgen.

## Ansprüche

1. Verfahren zur Regelung des Arbeitspunktes von Videoendstufen von Monitoren, bei denen der für die Darstellung von Information vorgesehene Teil des Rasters vollständig auf dem sichtbaren Teil des Bildschirms geschrieben wird, dadurch gekennzeichnet, daß der Strahlstrom während ausgewählter, für die Darstellung der Information auf dem Bildschirm nicht benötigter Zeilen gemessen und zur Regelung des Arbeitspunktes benutzt wird und daß durch Beeinflussung des Vertikal-Ablenkstroms die ausgewählten Zeilen auf einem nicht sichtbaren Teil des Bildschirms geschrieben werden.

2. Verfahren nach Anspruch 1, dadurch gekennzeichnet, daß die ausgewählten Zeilen auf einem von einem Rahmen abgedeckten Teil des Bildschirms geschrieben werden.

3. Verfahren nach Anspruch 1, dadurch gekennzeichnet, daß die ausgewählten Zeilen außerhalb des aktiven Teils des Bildschirms geschrieben werden.

4. Verfahren nach einem der vorhergehenden Ansprüche, dadurch gekennzeichnet, daß einem im wesentlichen sägezahnförmigen Vertikal-Ablenkstrom jeweils zu Beginn der vertikalfrequenten Ablenkperiode ein Impuls überlagert wird.

5. Schaltungsanordnung zur Durchführung des Verfahrens nach Anspruch 4, dadurch gekennzeichnet, daß im Vertikal-Ablenkkreis (41, 42, 43, 44) ein Gegenkopplungs-Widerstand (44) angeordnet ist und daß dem Gegenkopplungs-Widerstand (44) ein Parallel-Widerstand (47) während des Auftretens des Impulses zuschaltbar ist.

6. Schaltungsanordnung nach Anspruch 5, dadurch gekennzeichnet, daß der Parallel-Widerstand (47) mit dem Ausgang eines Verstärkers (46) verbunden ist, dessen Eingang über einen Impulsformer (15) mit vertikalfrequenten Impulsen beaufschlagt ist.

7. Schaltungsanordnung zur Durchführung des Verfahrens nach Anspruch 4, dadurch gekennzeichnet, daß eine Stromquelle (48, 49) an einem im wesentlichen aus einer Vertikal-Ablenkendstufe (41) und einer Ablenkspule (42) gebildeten Ablenkkreis angeschlossen ist und daß die Stromquelle (48, 49) mit vertikalfrequenten Impulsen angesteuert ist.

8. Schaltungsanordnung nach Anspruch 7, dadurch gekennzeichnet, daß die Stromquelle (48, 49) an den von der Vertikal-Ablenkendstufe (41) abgewandten Anschluß der Ablenkspule (42) angeschlossen ist.

9. Schaltungsanordnung nach Anspruch 8, dadurch gekennzeichnet, daß die Stromquelle (48, 49) von einem Verstärker (48) und einem Widerstand (49) gebildet ist und daß der Eingang des Verstärkers an den Ausgang eines Impulsformers (45) angeschlossen ist, welchem vertikalfrequente Impulse zugeführt sind.

Fig. 1

Fig. 2

a) U ... t1 t2 t3 t4 t5 t

b) U ... t

c) U ... t

d) U ... t

e) I ... t

f) I ... t

g) I ... t

Fig. 3

Fig. 4